# EUROPEAN PATENT SPECIFICATION

(11) **EP 0 617 886 B1**
(45) Date of publication and mention of the grant of the patent: **26.05.1999**
(21) Application number: 94400690.7
(22) Date of filing: 30.03.1994
(51) Int. Cl.: A01J 25/16, A01J 25/00

(54) **Cheese and a process for manufacturing it**
Käse und Verfahren zu seiner Herstellung
Fromage et son procédé de fabrication

(30) Priority: 31.03.1993 JP 74367/93; 31.03.1993 JP 96606/93
(43) Date of publication of application: 05.10.1994
(73) Proprietor: SNOW BRAND MILK PRODUCTS CO., LTD., Sapporo-shi, Hokkaido 065 (JP)
(72) Inventor: Sasaki, Hirotaka, Sayama-shi, Saitama-ken (JP); Maekawa, Kouji, Kawagoe-shi, Saitamam-ken (JP); Higashiyama, Mitsumaro, Kawasaki-shi, Kanagawa-ken (JP)
(74) Representative: Polus, Camille

(56) References cited:
- EP-A- 0 387 959
- EP-A- 0 418 977
- GB-A- 504 092

## Description

### BACKGROUND OF THE INVENTION

The present invention relates to a process for manufacturing cheese free from molds and aerobic bacteria which otherwise would grow and increase on a surface of cheese, in which the surface of cheese is air-tightly covered with a sheet of film and thereby said molds and aerobic bacteria are prevented from growing and increasing on the surface of cheese. A process having the features as set forth in the preamble portion of claim 1 is known for example from EP-A-0,418,977.

Natural cheese, particularly Camembert cheese and Limburger cheese have usually been manufactured by letting molds and aerobic bacteria grow and increase on the surface of cheese to achieve ripening of curd.

Certain steps included in the conventional manufacturing process, for example, the step of decomposing protein and fat utilizing eumycetes such as molds, aerobic bacteria and the like has inevitably led not only to generation of foul smell or discoloration but also to formation of an undesirable layer comprising microorganisms such as molds and aerobic bacteria on the surface of cheese. Usually, the consumer has scraped or washed such unnecessary layer off and then eaten only remaining cheese. Consequently, a significant net quantity loss of the merchandise combined with residual foul smell has been a serious obstacle to achieve a desired marketability of such cheese having its surface covered with the layer of microorganisms. According to the conventional process of manufacturing, it has been impossible to propagate molds and aerobic bacteria locally on desired location or desired portion and they have been reluctantly propagated all over the surface of cheese. Removal of said undesirable molds and eumycetes forming the layer of microorganisms has required cumbersome operation of washing off or scraping off and, even after such operation, foul smell has sometimes remained on the surface of cheese, so the portion likely taking part in generation of such foul smell also have had to be removed. While such layer of microorganisms comprising eumycetes, for example, molds and aerobic bacteria is useful for manufacturing of cheese (this layer is known as "mat" in the technical field of Camembert cheese), this layer has often been disliked by consumers depending on individual's taste and, in order to be marketable, such molds and aerobic bacteria have had to be removed from the surface of cheese.

Cheese is generally classified into natural cheese and process cheese, both of which have usually been placed on the market in the form of articles molded and packaged in desired sizes and shapes, respectively. For process cheese, individually packaged several small-sized pieces have usually been packed in a single case.

For natural cheese, for example, Camembert cheese, on the other hand, if it is initially molded in a bite-sized piece which is convenient to eat, too much quantity of molds would cover all over the surface of cheese, injuring its palatability as well as its image as the merchandise due to loss of edible portion. To solve this problem, a surface area to be covered with molds or the like has been reduced by molding it into a relatively large size so that this large lump may be cut by consumer into bite-sized pieces immediately before eaten.

To meet consumer's demand, natural cheese also should be pretreated so that it may be divided into small-sized pieces which are convenient for eating similarly to the case of process cheese.

However, if cheese is initially molded into bite-sized pieces, its surface would be covered with excessive quantity of molds and aerobic bacteria. If, during a series of manufacturing steps, cheese which has been initially molded into relatively large size is subsequently cut into bite-sized individual pieces several of which are aligned in close contact with one another and subjected to ripening or heating treatment followed by wrapping them as a single pack, the cut ends of the respective pieces brought in close contact with one another would be inseparably molten together during said treatment and the operation of cutting would be then meaningless.

It is serious demanded, therefore, that, after the Initial lump or cheese has been cut into a set of bite-sized pieces, the cut ends should not be molten together during ripening or heating treatment.

The present invention is based on the findings that molds and aerobic bacteria can be effectively prevented from growing and propagating on the surface of cheese during the process of manufacturing it so as to release the consumer from cumbersome operation of washing or scraping the surface of cheese off before eating, and generation of molds and aerobic bacteria after the initial lump of cheese has been cut as well as melting together of the respective adjacent cut ends due to the heating treatment can be also avoided.

### SUMMARY OF THE INVENTION

It is an object of the invention to provide, according to an aspect, a process for manufacturing cheese accompanied with neither growth of molds and aerobic bacteria on its surface nor injury of its palatability and to provide, according to another aspect, cheese allowing the aerobic microorganisms (including eumycetes, for example, molds and aerobic bacteria) covering the unnecessary portion of cheese to be easily removed.

The object set forth above is achieved, according to the invention, by a process for manufacturing cheese having the features as set forth in the characterising portion of claim 1.

Film being useful includes a sheet of film made from synthetic resin such as polypropylene (PP), polyethyleneterephthalate, polyethylene and cellophane, wax paper and parchment paper.

The present invention is preferably applied to natural cheese such as Camembert cheese, Gouda cheese and Cheddar cheese.

An embodiment of the invention is applicable to a process for manufacturing cheese assembled from appropriate sized pieces of cheese not only to avoid growth of molds and aerobic bacteria on the surfaces which must be free from existence of such microorganisms, thereby avoiding injury of the palatability but also to facilitate separation of the individual pieces one from another.

Said embodiment specifically comprises steps of cutting a lump of cheese or curd into a plurality of appropriate sized pieces, tightly covering each of these pieces on its surfaces, which must be free from growth of molds, with the sheet of film, assembling again these pieces each tightly covered with the sheet of film together so that the outer surfaces of film come in close contact with one another, and packing them in a container, followed by subjecting them to ripening or heating treatment as occasion demands.

The process for manufacturing such assembled pieces of cheese in which the individual pieces of cheese are tightly covered with the sheet of film is preferably implemented by an apparatus of arrangement as will be described below.

This apparatus comprises a cheese piece line-up machine provided on its top surface with a member of a predetermined configuration suitable for receiving cheese pieces cut from an initial cheese lump and adapted to be under an effect of suction from below, a film feeder and a cheese feeder so that the film feeder places the sheet of film on the configuration member provided on the top of the cheese piece line-up machine, then said sheet of film comes in close contact with this configurated member under the effect of suction from below so as to be molded in conformity with the configuration of said member, then the pieces of cheese previously molded also in conformity with the configuration of said member are fed by the cheese feeder onto the molded film and thereby surfaces of the respective cheese pieces are tightly covered with said sheet of film.

It should be understood that there may be provided film molding means above the cheese piece line-up machine and this means may be engaged with the member of a predetermined configuration provided on the cheese piece line-up machine to achieve a reliable molding of film.

Cheese manufactured is preferably the one having surfaces which must be free from existence of aerobic microorganisms and cut into bite-sized individual pieces.

The term "bite-size" should be understood as a size convenient to eat and more specifically as a size in a range of 10 × 10 × 10 mm to 40 × 40 × 40 mm.

Natural cheese is manufactured by a process comprising steps of adding a suitable quantity of starter to pasteurized milk as raw material to initiate lactic acid fermentation, then adding rennet to it and thereby solidifying casein to form curd, cutting this curd into small cubes, cooking them, removing whey, compressing said cubes of curd, adding sodium chloride and the other seasoning agents and ripening them. During this step of ripening, molds and aerobic bacteria grow on the surface of curd and lead to unpleasant touch, so natural cheese is usually molded in a relatively large size.

According to an embodiment of the invention, cheese or curd thus molded in a relatively large size is cut, at any step of the process for manufacturing, into appropriate size pieces, preferably into bite-sized pieces. The step of cutting may be inserted immediately after molding of curd or immediately before generation of aerobic microorganisms. The bite-sized pieces of cheese are assembled together again in close contact with one another so as to avoid growth of microorganisms such as molds on the cut ends into the configuration of the initial cheese lump and then stored, or further subjected to ripening treatment and/or heating treatment and then stored.

To avoid undesirable growth of molds and the other microorganisms on the cut, ends after the bite-sized pieces of cheese are assembled together again in close contact with one another, the individual pieces of cheese are lightly covered with the sheet of film for example, of polypropylene before they are assembled together.

In this manner, it is assured to prevent molds and the other microorganisms from growing on the surfaces of the individual pieces coming in close contact with one another. Alternatively, a mold, of which the interior space is partitioned by walls of synthetic resin film, is filled with curd, then this assembly is compression-molded, curd is taken out together with the sheet of film from the mold, the pieces of cheese thus tightly covered with the sheet of film are assembled together, subjected to ripening treatment and/or heating treatment, and placed on market in the form of assembled pieces of cheese having their contacting surfaces covered with the sheet of film.

When final product of cheese is to be cut into small sized pieces, the cut ends are covered with the sheet of film but such product is subjected to neither ripening treatment nor heating treatment.

The object of the invention set forth above, i.e., providing the consumer with cheese so improved that the undersirable growth of molds and aerobic bacteria on its surface are reliably avoided and its palatability is not injured is as will be described below.

The invention provides a process for manufacturing chesse wherein cheese curd is wholly or partially covered with a sheet of film before ripening in such a way that a close contact between the sheet of film and the cheese curd is ensured, said process being characterized in that said sheet of film is a netty, aventurine or fibriform film having interstice in the order of 5 to 900 µm and in that the outer surface thereof is inoculated with aerobic bacteria by spraying or direct coating before ripening.

The process of the invention not only allows bacteria to grow and be immobilized on the outer surface of film but also allows nutrient as well as moisture of cheese curd to be easily absorbed by bacteria and, in addition, allows the inner surface of film to come reliably in close contact with curd and thereby to hold moisture. Thus, no growth of aerobic bacteria occurs on the surface of curd covered with the sheet of film made from netty, aventurine or fibriform film. Alternatively, non woven fabric or air-impermeable film converted to air-permeable film by perforating it may be also used for the same purpose.

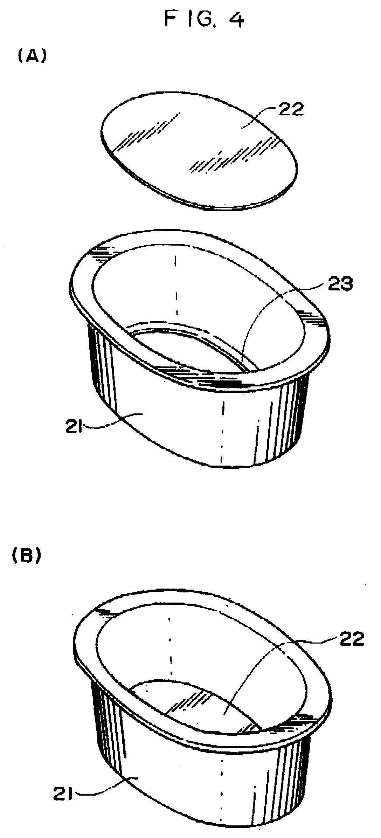

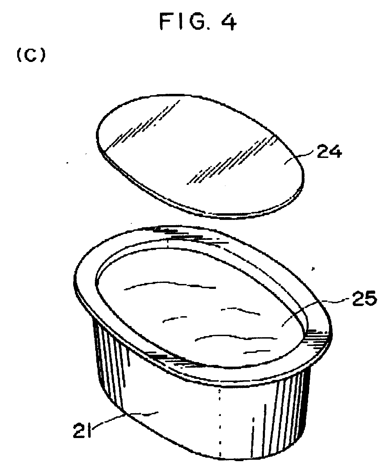

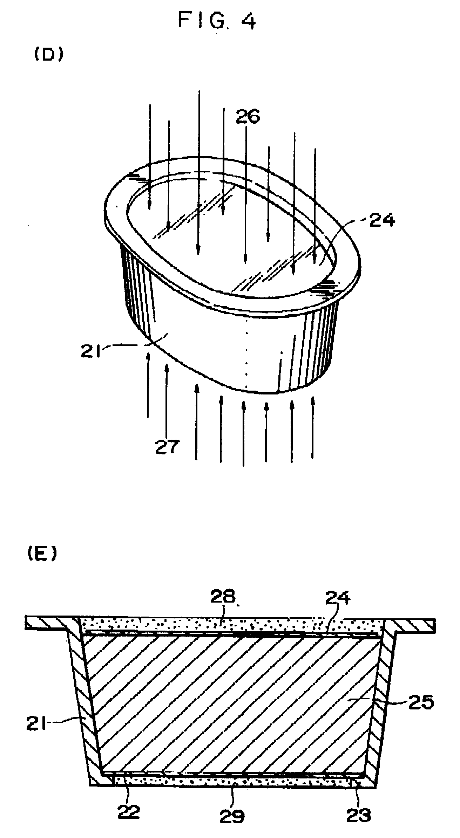

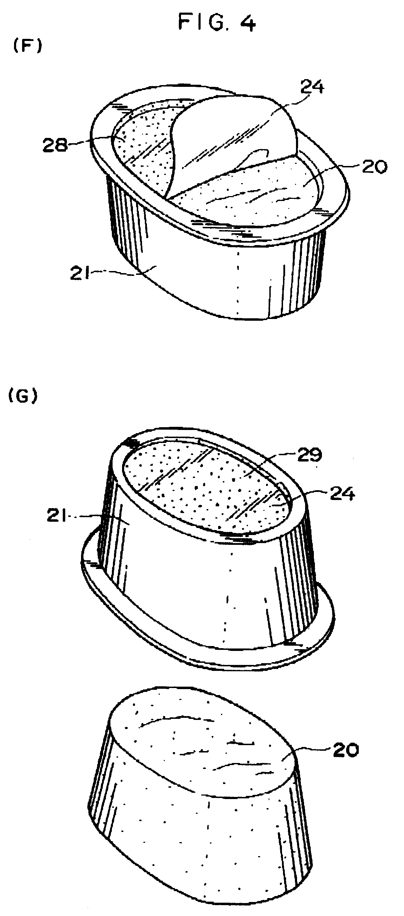

While the surface of cheese curd may be wholly covered with such sheet of film, a further embodiment of the invention consists in putting cheese curd into a container having neither top nor bottom as shown by Fig. 4(A) and to cover top and bottom of cheese curd put into the container. A part of cheese surface, over which growth of aerobic bacteria is undesirable, may be air-tightly covered with a sheet of film or an air-impermeable material to avoid such growth of aerobic bacteria thereon. Said air-impermeable material should be understood as the inner surface of the container shown by Fig. 4(A). Namely, the inner surface of the container comes in close contact with cheese curd to prevent the growth of aerobic bacteria on the surface of cheese curd.

At top and bottom of the container filled with said cheese, the cheese curd may be tightly coated with netty, aventurine or fibriform film. Afterwards the aerobic bacteria are inoculated on the outer surface of said film by spraying or applying these aerobic bacteria thereonto.

Consumer is required only to separate the aerobic bacteria growing on film from cheese together with this film immediately before eating this cheese and need not to scrape the unnecessary portion off from cheese curd.

The aerobic bacteria inoculated on the outer surface of film by spraying or applying them thereonto absorb nutrient and moisture from cheese curd and thereby propagate within film as well as on the film surfaces.

While Fig. 4 shows a specific embodiment in which both the top and the bottom are coated with film, the other case is also conceivable, for example any one of the top and the bottom may be film-coated. Inversely, both the top and the bottom may be covered with a sheet of film or air-impermeable material while the lateral surface may be film-coated to ripen cheese by propagation of the aerobic bacteria on the lateral surface of cheese curd. Furthermore, cheese curd may be wholly coated with film for ripening of cheese.

Some of consumers dislike visually recognizable bacteria clinging to the surface of cheese to be eaten and cheese processed according to the invention can satisfy taste of such consumers.

Specifically, the process of the invention drives off the drawback of conventional cheese such that it generates foul smell due to action of the bacteria clinging to its surface and has disordered appearance despite of its delicousness, and can supply the consumers with cheese of good appearance as well as high marketability.

### BRIEF DESCRIPTION OF THE DRAWINGS

The above and another objects of the invention bacteria on the outer surface of said film by spraying or applying these aerobic bacteria thereonto.

Consumer is required only to separate the aerobic bacteria growing on film from cheese together with this film immediately before eating this cheese and need not to scrape the unnecessary portion off from cheese curd.

The aerobic bacteria inoculated on the outer surface of film by spraying or applying them thereonto absorb nutrient and moisture from cheese curd and thereby propagate within film as well as on the film surfaces.

While Fig. 4 shows a specific embodiment in which both the top and the bottom are coated with film, the other case is also conceivable, for example any one of the top and the bottom may be film-coated. Inversely, both the top and the bottom may be covered with film while the lateral surface may be film-coated to ripen cheese by propagation of the aerobic bacteria on the lateral surface of cheese curd. Furthermore, cheese curd may be wholly coated with film for ripening of cheese.

Some of consumers dislike visually recognizable bacteria clinging to the surface of cheese to be eaten and cheese according to the second sub-technical means or the invention can satisfy taste of such consumers.

Specifically the further embodiments of the invention drives off the drawback of conventional cheese such that it generates foul smell due to action of the bacteria clinging to its surface and has disordered appearance despite of its deliciousness, and can supply the consumers with cheese of good appearance as well as high marketability.

### BRIEF DESCRIPTION OF THE DRAWINGS

The above and other objects of the invention will be seen by reference to the description taken in connection with the accompanying drawings, in which;

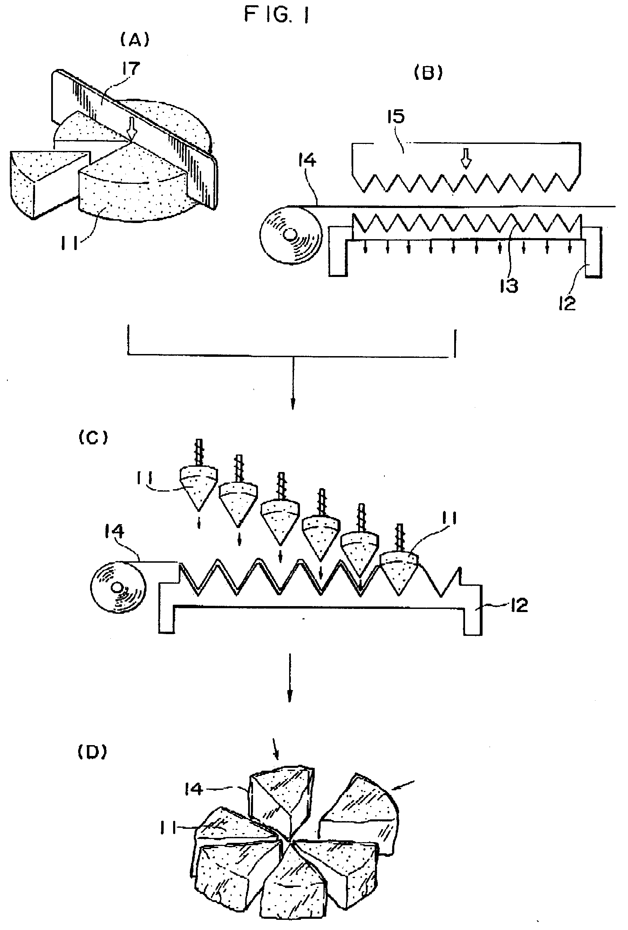

Fig. 1(A) through (D) relates to one embodiment of the invention and illustrate steps of cutting a disc-shaped cheese lump into sector-shaped pieces and then assembling these sector-shaped pieces together again to the initial disc-shape, in which (A) is a perspective view illustrating the step of cutting the disc-shaped cheese lump into the sector-shaped pieces, (B) is a plan view illustrating the step of molding a sheet of film into the sector-shape, (C) is a plan view illustrating the step of filling an undulated member 13 with the pieces of cheese, and (D) is a perspective view illustrating the step of assembling the pieces of cheese together again after cut ends of the respective pieces have been covered with the sheet of film;

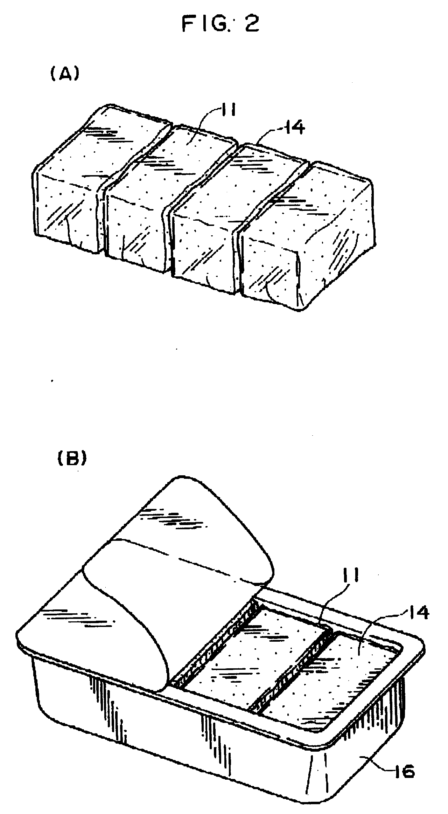

Fig. 2(A) and (B) also relates to one embodiments of the invention, in which (A) is a perspective view illustrating the step of cutting a lump of cheese which is rectangular as viewed from above into cheese pieces each being square as viewed from above and assembling these pieces together again, and (B) is a perspective view illustrating the step of loading a container 16 with these pieces of cheese;

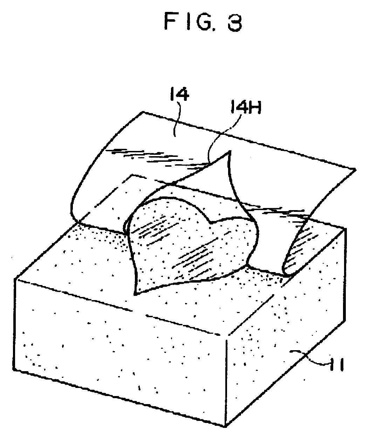

Fig. 3 also relates to one embodiment and is a perspective view illustrating the step of decoratively forming a surface of cheese lump utilizing a sheet of film ; and
Fig. 4(A) through (G) relates to a further embodiment of the invention, in which (A) and (B) are perspective views illustrating the container 21 and how to provide the container with a sheet of film 22. (C) is a perspective view illustrating a state in which the container has been filled with curd 25 so as to be supported on the sheet of film 22, (D) is a perspective view illustrating a manner in which the sheets of film 22, 24 serving as top and bottom covers for the container 21, respectively, are sprayed with aerobic bacteria, (E) is a sectional view of the container 21 on a step of cheese ripening, (F) is a perspective view illustrating a state in which, upon completion of cheese ripening, the sheet of film 24 is being removed from the lump of cheese together with aerobic bacteria having grown and clinging thereto, and (G) is a perspective view illustrating a lump of naked cheese which has been taken out from the container 21 and cleared away from the sheets of film 22, 24 carrying aerobic bacteria clinging thereto.

### DETAILED DESCRIPTION OF THE INVENTION

Description will be started from an embodiment according to which a part of cheese lump or a part of cuts ends thereof expected to be free from existence of molds, aerobic bacteria or the like is tightly covered with a sheet of film in order to prevent such microorganisms from growing thereon.

Aerobic bacteria which is used in the inven-tion include facultatives. Eumycetes which can be used for manufacturing of so-called moldy cheese such as Camembert cheese, Brie cheese include penicilium camebmerti, penicilium caseicolum, Limburger, Port salut, Saint Paulin, Livarot and Brick, and cellular slime molds which can be used for the same purpose include Brevibacterium linens. The aerobic bacteria inclusive of facultatives which is used in the invention for manufacturing of natural cheese such its Gouda and Cheddar include Streptococcus lactis, Streptococcus cremoris, Streptococcus thermophilus, Lactobacillus casei, Lactobacillus bulgaricus. One or more of these species in the order of 0.4 to 2 %/w with respect to milk may be used jointly or in the form of a mixture.

Fig. 1(A) through (D) show a first embodiment, in which a disc-shaped lump of Camembert cheese is cut equally into several sector-shaped pieces each presenting V-shaped cut ends and, after these cut ends have been covered with a sheet of film, the sector-shaped pieces of cheese are assembled together again into the disc shape.

Fig. 1(A) illustrates the step of cutting a lump of cheese which has been molded in disc-shape into sector-shaped pieces each having V-shaped cut ends. Fig. 1(B) illustrates the step of molding a sheet of film in V-shape, Fig. 1(C) illustrates the step of loading a supporting means with the pieces of cheese, and Fig. 1(D) illustrates the step of assembling the pieces of cheese together again into the initial disc-shape after the cut ends of the respective pieces have been covered with the sheet of film.

Referring to Fig. 1(A). the disc-shaped lump of cheese is cut by a cutter 17 into a plurality of sector-shaped cheese pieces 11 each presenting V-shaped cut ends. Said pieces of cheese 11 are fed by a conveyor (not shown) to a line-up machine 12. An undulated member 13 serving to receive the pieces of cheese 11 in the line-up machine 12 is configurated in conformity with a configuration presented by the cut ends of the respective pieces 11 which are to be covered with the sheet of film. Referring to Fig. 1(B), the sheet of film 14 is placed by a film feeder (not shown) onto the undulated member 13 under an effect of suction provided from below the undulated member 13. It is also possible to employ undulated molding means 15 having an undulation just opposed to the undulation of the undulated member 13 and thereby to mold the sheet of film 14 in a shape suitable to cover the cut ends of the plural pieces of cheese 11.

Referring to Fig. 1(C), the molded sheet of film 14 is loaded with the pieces of cheese 11 as to have respective cut ends being tightly covered with the sheet of film 14. The pieces of cheese thus tightly covered with the sheet of film are then assembled together again into the initial disc-shape with the sheet of film interposed between each pair of adjacent cut ends (shown in Fig. 1(D)) and then subjected to an ripening treament. It should be understood that no propagation of molds occurs on the cut ends of the cheese pieces but top or bottom of each pieces is defenseless to propagation of molds and aerobic bacteria, since these locations have no means of prevention.

The ripening treatment may be followed by a heating treatment. For example, said assembly of cheese lumps may be further covered with another sheet of synthetic resin film (PP film) and then placed into a container for said heating treatment. The assembly of cheese lumps may be packaged and stored for a predetermined period before placed on market. On a dining table, the container and then the sheet of synthetic resin film may be unsealed, and thereafter said sheet of film 14 may be removed to take out the respective pieces of cheese.

It should be understood that the initial lump of cheese is not limited to said disc-shaped lump to be cut into sector-shaped pieces each presenting V-shaped cut ends and may be, for example, a rectangular lump of cheese.

Figs. 2 (A) and (B) illustrate a further embodiment of the invention, in which the cuts ends of the respective rectangular pieces 11 are covered with a sheet of film 14 to prevent molds from growing on these cut ends. Referring to Fig. 2(A), the rectangular lumps of cheese are assembled together with the sheet of synthetic resin film interposed between each pair of adjacent cut ends. Referring to Fig. 2(B), the assembled pieces of cheese are loaded into a container 16 in preparation for a heating treatment.

In this manner, a relatively large lump of cheese may be cut into a plurality of appropriate sized pieces which may be assembled together with the sheet of film interposed between each pair of adjacent cut ends, independently of particular shape into which the initial cheese lump has been molded.

In preparing the assembled pieces of cheese, not only the cut ends to be brought in contact with one another but also a portion of a selected surface on which any growth of molds and aerobic bacteria should be avoided may be covered with the sheet of film to make said portion free from existence of molds and aerobic bacteria and thereby to make said selected surface decorative in combination with the remaining portion of said selected surface on which molds and aerobic bacteria propagate.

Fig. 3 illustrates a still further embodiment of the invention, in which a heart shaped portion 14H is cut away from the sheet of film 14, the surface of cheese is covered with this sheet of film 14 and the lump of cheese is subjected to the ripening treatment. After a predetermined heating treatment, this is placed on market and, when the consumer removes the sheet of film 14 to eat cheese. the heart shape will appear on the top of cheese lump. The heart shape will be clearly identified if the portion carrying molds and aerobic bacteria is differently colored from the portion carrying none of such microorganisms or if cheese of the former portion is different from cheese of the latter portion.

The method according to an embodiment of the invention involves assembling appropriate sized pieces of cheese together again into a single pack with the sheet of synthetic resin film being interposed between each pair of adjacent pieces during a series of its manufacturing steps is applicable not only to Camembert cheese but also generally to natural cheese such as Gouda and Cheddar. Also for Brie and Limburger, when a plurality of bite-sized pieces of cheese are assembled together in preparation for the heating treatment or the ripening treatment, the above-mentioned method of interposing the sheet of film will be effective to prevent the pieces from being inseparately molten together. This method will be effectively applicable also to process cheese when inoculation of aerobic is performed.

The first embodiment of the invention will be decribed more in details based on an experiment utilizing this embodiment.

### EXPERIMENT A

Curd prepared for Camembert cheese was loaded into a mold and compression-molded into a disc having a diameter of 8 cm and a thickness of 2.5 cm. The disc taken out from the mold was cut equally into six sector-shaped pieces of which the cut ends were covered with a sheet of polypropylene film as has been described with respect to said first embodiment and subjected to an ripening treatment within an ripening chamber approximately at 10°C for seven days.

These pieces of cheese were assembled together again into the initial disc-shape and further subjected to the ripening treatment for twenty days. Thereafter this assembled disc shaped lump of cheese was packaged as a single pack and subjected to the heating treatment. This pack was stored for four months and unsealed to take the pieces of cheese out from the package. The respective pieces of cheese were easily, i.e., separably taken out without the undesirable phenomenon that the respective pieces of cheese are inseparably molten together. Additionally, the surface or cheese which had been covered with the sheet of polypropylene film was free from growth of molds.

### EXPERIMENT B

Curd prepared for Camembert cheese was loaded into a mold and compression-molded into a disc having a diameter of 8 cm and a thickness of 2.5 cm. The disc taken out from the mold was subjected to the ripening treatment approximately at 10°C for twenty days and thereafter cut equally into six sector-shaped pieces of which the cut ends were covered with a sheet of polypropylene film. These pieces of cheese were assembled together again into the initial disc-shape and packaged as a single pack. This pack was stored for four months and unsealed to take the pieces of cheese out from the package. The respective pieces of cheese were easily, i.e. separably taken out without the undesirable phenomenon that the respective pieces of cheese are inseparably molten together. Furthermore, the surface of cheese which had been covered with the sheet of polypropylene film was free from groth of molds.

The sheet of film which has been mentioned above was used to cover the cut ends or the other surfaces of each piece and thereby to prevent molds and aerobic bacteria from growing and propagating over said cut ends or the other surfaces. Now the essential features of the invention will be described. The netty, aventurine or fibriform film mentioned in the characterizing portion of claim 1 is similar to the above-mentioned sheet of film in that the sheet of film prevents molds and aerobic bacteria from growing and propagating over said surfaces of cheese but distinguished from this in that the sheet of film lets molds and aerobic bacteria grow and propagate over the outer surface of film.

Specifically, the process of the invention uses enzymes or the like produced by hyphae of molds and aerobic bacteria to achieve ripening of cheese. Concerning aerobic bacteria of wash type, for example, bacteria themselves are not useful but enzymes produced by them have useful function.

The process of the invention prevents molds and aerobic bacteria from growing on and/or in cheese curd covered with the sheet of film but permits molds and aerobic bacteria to grow on the outer surface of film so that those molds and aerobic bacteria can be removed together with the shoot of film from the lump of cheese, more specifically as will be described below.

Referring to Fig. 4(A), the container 21 used has its bottom cut away and a rib 23 surrounding this open bottom to receive the sheet of film 22 placed from above as will be seen in Fig. 4(B). It is important also for this sheet of film to be easily brought in close contact with curd.

The sheet of film has a netty, aventurine of fibriform outer surface which facilitates bacteria to be immobilized and grow thereon and to absorb moisture and nutrient from curd.

The sheet of film has interstice in the order of 5 to 900 µm. Such film passes also moisture or whey or the like. Employing the sheet of film easily brought in close contact with curd should be used, a layer of air allowing molds and aerobic bacteria to grow between curd and film is eliminated and thereby a lump of cheese carrying neither molds nor aerobic bacteria on the curd surface can be produced. While the maximum interstice in the order of 900 µm is probably larger than spores, hyphae and bacteria of the aerobic microorganisms used in the invention, the object of the invention can be nevertheless achieved, since the microorganisms growing in such interstice can be clearly (perfectly) removed as the microorganisms growlng on the outer surface of film are removed together with the sheet of film so far as the sheet of film is in close contact with cheese curd.

When it is desired for the sheet of film to have a function of air bolding, it is also possible to employ a sheet of film holding a layer of air. While the container is illustrated with its bottom having been cut away to promote contact between the outer surface or film and ambient air, the bottom may be provided with may fine interstices (in the order of 1 mm) instead of cutting the bottom away. Referring to Fig. 4(C), curd 25 is loaded on the sheet of film 22 and top of the container is covered with the sheet of film 24 made from the same material of the bottom film 22.

Rererring to Fig. 4(D), the sheets of film 22, 24 covering bottom and top of the container 21, respectively, are sprayed and inoculated with aerobic bacteria from below 27 and above 26, respectively. It is also possible that the outer surfaces of the respective film sheets are directly coated with aerobic bacteria. From this state, temperature and humidity are adjusted to initiate proper ripening process of curd.

Referring to Fig. 4(E), as a result of such ripening process, aerobic bacteria grow and propagate on upper surface 28 and lower surface 29 of the container 21. Enzymes produced by aerobic bacteria pass through the sheets of film 22, 24 and decompose protein and fat contained in curd 25. Referring to Fig. 4(F), after the ripening process of cheese has been completed, the sheet of film 24 covering the top 28 of the container 21 is removed and thereby aerobic bacteria clinging to the sheet of film 24 covering the top 28 of the container are separated together with the sheet of film 24 from the content 20.

Now, referring to Fig. 4(G), the aged content 20 is taken out from the container 21 but inverting the container 21. Molds and aerobic bacteria cling to and grow on the outer surface 29 of the film sheet 24 covering the bottom of the container 21 but no such microorganism grows on the surface of the content 20.

The surface of cheese produced in this manner is free from existence of aerobic bacteria, so it is not required for consumer to wash or scrape unnecessary bacteria off before eating cheese. Namely, there is not any unnecessary portion on the surface of cheese.

Some of consumers say that they could eat with gusto if there are not aerobic microorganisms such as molds on the surface of cheese.

Consumers in some foreign countries consider the layer of molds and aerobic bacteria covering the surface of cheese as a kind of skin (known in the name of "mal" for Camembert cheese) or a part of the container and, when they desire to eat cheese, such skin covering the surface of cheese is peeled off by the hand and microorganism-free portion is eaten. Also in foreign countries, foul smell as well as discoloration due to aerobic bacteria covering the surface of cheese curd are disliked but inner naked cheese eaten with gusto. From such viewpoint, according to the process of the invention, the surface of cheese is covered with the sheet of film having interstice allowing enzymes produced by aerobic bacteria to pass therethrough into cheese cured so that the enzymes produced by bacteria growing on the outer surface of the film sheet may pass through this sheet of film to initiate the ripening process of curd.

According to the process of the invention, after completion of the ripening process, the sheet of film being in close contact with the surface of cheese may be removed to obtain aerobic bacteria-free cheese.

It should be remembered that the sheet of film must be in close contact with the surface of cheese. However, this contact may be appropriately tight contact rather than excessively tight contact, so far as propagation of molds and aerobic bacteria can be reliably avoided.

Utilizing the method as has been described above, it is possible to grow aerobic bacteria on a limited portion or zone, depending on the consumers' taste.

It is further possible to grow aerobic bacteria which are different in a central portion and an outer portion of a block as viewed from above. For example, the ripening process of cheese may be achieved by concentrically different aerobic bacteria. In a specific embodiment, the outer periphery is ripened by linens type bacteria and an inner periphery is ripened by Camembert type bacteria.

The previously described decorative effect is achieved by ripening the inside and the outside of the heart shaped portion by using aerobic bacteria of different types, respectively.

While the invention has been particularly shown and described with reference to preferred embodiment thereof, it will be understood by those skilled in the art that the foregoing and other changes in form and details can be made therein without departing from the scope of the invention as defined by the appended claims.

## Claims

1. Process for manufacturing cheese wherein cheese curd (25) is wholly or partially covered with a sheet of film (22, 24) before ripening in such a way that a close contact between the sheet of film (22, 24) and the cheese curd (25) is ensured, said process being characterized in that said sheet of film (22, 24) is a netty, aventurine or fibriform film having interstice in the order of 5 to 900 µm and in that the outer surface thereof is inoculated with aerobic bacteria by spraying or direct coating before ripening.

2. Process according to claim 1 wherein top and bottom of cheese curd are covered with the sheet of film (22, 24).

3. Process according to any of claims 1 and 2 wherein parts of cheese curd which have not been covered with said sheet of film are covered with air-impermeable material (21).

4. Process according to claim 3 wherein top and bottom of cheese curd are covered with air-impermeable material (21) and the lateral surface of cheese curd is coated with said sheet of film (22, 24).

5. Apparatus used in the process for manufacturing cheese according to claim 1, said apparatus comprising a cheese piece line-up machine (12) provided on its top surface with a member (13) of a predetermined configuration suitable for receiving cheese pieces cut from an initial cheese lump and adapted to be under an effect of suction from below, a film feeder (14) and a cheese feeder so that the film feeder places a sheet of film on said configurated member provided on the top surface of the cheese piece line-up machine, then said sheet of film comes in close contact with this configurated member under the effect of suction from below so as to be molded according to the predetermined configuration of said member, cheese pieces previously molded in a configuration corresponding to said configuration of said member provided on the top surface of the cheese piece line-up machine are fed by the cheese feeder onto said molded film and thereby surfaces of the respective cheese pieces are tightly covered with said sheet of film.

## Patentansprüche

1. Verfahren zur Herstellung von Käse, wobei Käsebruch (25) vor dem Reifen ganz oder teilweise mit einer Folie (22, 24) überzogen wird, so daß ein enger Kontakt zwischen der Folie (22, 24) und dem Käsebruch(25) sichergestellt ist, wobei das Verfahren dadurch gekennzeichnet ist, daß es sich bei der Folie (22, 24) um eine netzartige, aventurinartige oder faserförmige Folie mit Zwischenräumen in der Größenordnung von 5 bis 900 µm handelt, und daß vor dem Reifen aerobe Bakterien durch Besprühen oder direkten Auftrag in deren Außenfläche eingeimpft werden.

2. Verfahren nach Anspruch 1, wobei die Oberseite und die Unterseite des Käsebruchs mit der Folie (22, 24) bedeckt werden.

3. Verfahren nach einem der Ansprüche 1 und 2, wobei Teile des Käsebruchs, die nicht mit der Folie bedeckt wurden, mit luftundurchlässigem Material (21) bedeckt werden.

4. Verfahren nach Anspruch 3, wobei die Oberseite und die Unterseite des Käsebruchs mit luftundurchlässigem Material (21) bedeckt werden und die seitliche Fläche des Käsebruchs mit der Folie (22, 24) bedeckt wird.

5. Vorrichtung, die für das Verfahren zur Herstellung von Käse nach Anspruch 1 verwendet wird, wobei die Vorrichtung umfaßt: ein Käsestückanordnungsgerät (12), das an seiner oberen Oberfläche mit einem Element (13) mit einer vorherbestimmten Konfiguration ausgestattet ist, die dazu geeignet ist, Käsestücke, die aus einem ursprünglichen Käselaib ausgeschnitten wurden, aufzunehmen, und die dazu geeignet ist, sich unter den Auswirkungen eines Sogs von unten zu befinden, eine Folienzuführvorrichtung (14) und eine Käsezuführvorrichtung, so daß die Folienzuführvorrichtung eine Folie auf das konfigurierte Element legt, das sich an der Oberseite des Käsestückanordnungsgerätes befindet, wobei danach die Folie unter der Einwirkung des Sogs von unten in engen Kontakt mit diesem konfigurierten Element kommt, um dadurch gemäß der vorherbestimmten Konfiguration des Elements geschmolzen zu werden, wobei die Käseteile, die zuvor in einer Konfiguration, welche der Konfiguration des Elements entspricht, das an der oberen Oberfläche des Käsestückanordnungsgerätes angeordnet ist, geschmolzen wurden, von der Käsezuführvorrichtung auf die geschmolzene Folie geführt werden und die Oberflächen der jeweiligen Käsestücke dadurch von der Folie dicht abgedeckt werden.

## Revendications

1. Procédé de fabrication de fromage dans lequel du caillé fromager (25) est totalement ou partiellement couvert d'une pellicule (22, 24) avant la maturation de telle manière que soit assuré un contact étroit entre la pellicule (22, 24) et le caillé fromager (25), ledit procédé étant caractérisé en ce que ladite pellicule (22, 24) est une pellicule réticulaire, aventurinée ou fibriforme ayant des interstices de l'ordre de 5 à 900 µm et en ce que la surface extérieure de celle-ci est ensemencée avec des bactéries aérobies par pulvérisation ou enduction directe avant maturation.

2. Procédé selon la revendication 1, dans lequel le dessus et le dessous du caillé fromager sont couverts par la pellicule (22, 24).

3. Procédé selon l'une quelconque des revendications 1 et 2, dans lequel les parties du caillé fromager qui n'ont pas été couvertes par ladite pellicule sont couvertes d'un matériau imperméable à l'air (21).

4. Procédé selon la revendication 3, dans lequel le dessus et le dessous du caillé fromager sont couverts d'un matériau imperméable à l'air (21) et la surface latérale du caillé fromager est couverte de ladite pellicule (22, 24).

5. Appareil utilisé dans le procédé de fabrication de fromage selon la revendication 1, ledit appareil comprenant une machine (12) d'alignement des morceaux de fromage, comportant sur sa surface supérieure un élément (13) de configuration prédéterminée convenant pour recevoir des morceaux de fromage découpés dans un bloc de fromage initial et pour être soumis à un effet d'aspiration par le dessous, un distributeur de pellicule (14) et un distributeur de fromage, de sorte que le distributeur de pellicule place une pellicule sur ledit élément configuré disposé sur la surface supérieure de la machine d'alignement des morceaux de fromage, puis ladite pellicule entre en contact étroit avec cet élément configuré sous l'effet de l'aspiration par le dessous afin d'être moulée selon la configuration prédéterminée dudit élément, les morceaux de fromage préalablement moulés en une configuration correspondant à ladite configuration dudit élément disposé sur la surface supérieure de la machine d'alignement des morceaux de fromage sont distribués par le distributeur de fromage sur ladite pellicule moulée, et ainsi les surfaces des morceaux de fromage respectifs sont étroitement couvertes de ladite pellicule.
